(19) **Europäisches Patentamt / European Patent Office / Office européen des brevets**

(11) **EP 3 322 962 B1**

(12) # EUROPEAN PATENT SPECIFICATION

(45) Date of publication and mention of the grant of the patent:
**18.11.2020 Bulletin 2020/47**

(21) Application number: **16757948.1**

(22) Date of filing: **14.07.2016**

(51) Int Cl.:
**G01F 1/34** (2006.01)   **G01F 1/88** (2006.01)

(86) International application number:
**PCT/IB2016/054215**

(87) International publication number:
**WO 2017/009802 (19.01.2017 Gazette 2017/03)**

(54) **METHOD FOR THE MEASUREMENT OF AN UNSTEADY LIQUID FLOW RATE, IN PARTICULAR OF A HIGH PRESSURE LIQUID FLOW**

VERFAHREN ZUR MESSUNG EINER UNBESTÄNDIGEN FLÜSSIGKEITSSTRÖMUNGSRATE, INSBESONDERE EINER HOCHDRUCKFLÜSSIGKEITSSTRÖMUNG

PROCÉDÉ POUR LA MESURE D'UN DÉBIT D'ÉCOULEMENT DE LIQUIDE INSTABLE, EN PARTICULIER D'UN ÉCOULEMENT DE LIQUIDE À HAUTE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2015 IT UB20152145**

(43) Date of publication of application:
**23.05.2018 Bulletin 2018/21**

(73) Proprietors:
• **Rabotti S.r.l.**
  **28066 Galliate (IT)**
• **Politecnico di Torino**
  **10129 Torino (IT)**

(72) Inventor: **FERRARI, Alessandro**
**10129 Torino (IT)**

(74) Representative: **Boggio, Luigi et al**
**Studio Torta S.p.A.**
**Via Viotti, 9**
**10121 Torino (IT)**

(56) References cited:
**WO-A2-2009/019591     US-A1- 2014 200 836**

• **ANTON BERGANT ET AL: "Developments in unsteady pipe flow friction modelling", JOURNAL OF HYDRAULIC RESEARCH, vol. 39, no. 3, 1 July 2001 (2001-07-01), pages 249-257, XP055257927, NL ISSN: 0022-1686, DOI: 10.1080/00221680109499828**

**Description**

TECHNICAL FIELD

The present invention concerns a method for the calculation of an absolute value of an unsteady liquid flowrate, in particular for high pressure applications, like fuel injection circuits and hydraulic oil power circuits.

Liquids that flow in high pressure conditions, i.e. between 50 and 2500 bar, can occur at the delivery of alternating positive-displacement pumps, in injection systems for diesel and GDI petrol engines, antilock braking systems (ABS) or traction control systems (TCS) or electronic stability control systems (ESP). A pipe for supplying a high pressure liquid generally has a reduced internal diameter.

BACKGROUND ART

It is known that the absolute value of an unsteady flow rate can be calculated on the basis of the detection of two pressure sensors spaced along the inside of the pipe, where the liquid flow to be measured is conveyed. Calculation of the absolute flowrate requires, as illustrated in WO-A1-2009019591, the determination of a term that corresponds to the flowrate evaluated at the initial time t=0 of the pressure measurements (initial condition). This determination or estimate becomes critical when the flowrate at the initial time cannot be considered null. In addition to the inherent difficulty in the initial condition of the flowrate, there is the further problem of carefully evaluating the zero errors of the two pressure sensors. The zero (or zero offset) error is defined as the difference between the signal generated by each pressure sensor and a pressure reference. The relative influence of the zero errors of the pressure transducers on the flowrate calculation must be annulled or reduced so that the flowrate value calculated is representative of the real system, especially when small oscillations in pressure and flowrate have to be measured.

The object of the present invention is to present a method for calculation of an absolute value of the unsteady flowrate of a liquid which is at least partly free from the above drawbacks.

DISCLOSURE OF INVENTION

The object of the present invention is achieved by means of a measurement method according to claim 1.

BRIEF DESCRIPTION OF THE DRAWINGS

The invention will now be described with reference to the accompanying drawings, which illustrate non-limiting embodiment examples and refer:

- Figure 1 to a diagram of a measurement station implementing the method according to the present invention;
- Figure 2 to an application diagram of the measurement station of figure 1 on board a fuel injection system for diesel engines;
- Figures 3, 4 to respective validation graphs of the flowrates obtained by means of the method according to the present invention in two different operating conditions of the injection system.

BEST MODE FOR CARRYING OUT THE INVENTION

The behaviour of a fluid system is described by the following system of partial differential equations:

$$\begin{cases} \dfrac{d\rho}{dt} + \rho\,\dfrac{\partial u}{\partial x} = 0 \\[2mm] \dfrac{\partial u}{\partial t} + u\,\dfrac{\partial u}{\partial x} + \dfrac{1}{\rho}\,\dfrac{\partial p}{\partial x} = -\dfrac{4\,\tau_w}{\rho d} \end{cases} \qquad (1)$$

where:

't' is the time;
'x' is the position along the axis of a pipe;
'$\rho$' is the average density of the liquid on the cross section of the pipe;
'u' is the average velocity of the liquid on the cross section of the pipe;

'p' is the average pressure of the liquid on the cross section of the pipe;

'd' is the internal diameter of the pipe; and

'$\tau_w$' is the wall fluid friction.

Integrating the equation 1 along a length 'l' of the pipe, for a locally incompressible fluid (p is constant with respect to x and t in fixed operating conditions of the system, on which the meter implementing the method according to the present invention is installed), we obtain:

$$\frac{d\overline{G}}{dt} = \frac{A}{l}\Delta p - \pi d \overline{\tau}_w \qquad (2)$$

where:

'A' is the cross section of the pipe; and

$\Delta p$ is the pressure difference at the ends of the pipe with length 'l', coinciding with the distance between pressure sensors that measure the pressure difference. The instantaneous pressure difference can be either positive or negative depending on the pressure waves and the hydraulic phenomena inside the pipe 7; and

$$\overline{G}(t) = \frac{1}{l}\int_0^l G\,dx \qquad \overline{\tau}_w(t) = \frac{1}{l}\int_0^l \tau_w\,dx \qquad (3)$$

The expression 3 provides a spatial average of the flowrate. However, under the hypothesis of a locally incompressible fluid, with a good approximation we can set $G(x,t) \approx \overline{G}(t)$, i.e. consider the dependence of G on x to be negligible.

According to the present invention the average wall friction along the pipe with length 'l' according to eq. 3 is expressed as:

$$\overline{\tau}_w = \overline{\tau}_{sf} + \overline{\tau}_{fdf} = \pi d \frac{\langle\overline{f}\rangle}{8\rho A^2}\langle\overline{G}\rangle\left|\langle\overline{G}\rangle\right| + \overline{\tau}_{fdf} \qquad (4)$$

where:

$\overline{\tau}_{sf}$ is a term characteristic of the wall friction on the length 'l' relative to a steady liquid flowrate (steady friction);

$\overline{\tau}_{fdf}$ is a characteristic term of the average wall friction on the length 'l' relative to an unsteady liquid flowrate (unsteady friction or friction depending on the frequency);

$\langle\overline{G}\rangle$ is the average flowrate in both space and time and is therefore a term which, once calculated or detected, is constant (in the hypothesis of a locally incompressable fluid $\langle\overline{G}\rangle \approx \langle G\rangle$);

$\overline{f} = f(\overline{Re})$ is an average friction factor on the length 'l' which, preferably, can be calculated as follows by means of Moody's diagram for Reynolds numbers from $\overline{Re}=3.10^3$ to $\overline{Re}=10^8$ and for dynamic viscosity $\varepsilon/d \leq 5 \cdot 10^{-2}$ ($\varepsilon/d$ is the relative roughness of the walls)

$$\overline{f} = 1.613\left\{\ln\left[0.234\left(\frac{\varepsilon}{d}\right)^{1.1007} - \frac{60.525}{\overline{Re}^{1.1105}} + \frac{56.291}{\overline{Re}^{1.0712}}\right]\right\}^{-2} \qquad (5)$$

and $\langle\overline{f}\rangle$ is the friction factor as per the previous point averaged also over time. It is therefore a term which, once calculated, is constant. For $\overline{Re} \leq 2.10^3$ the typical laminar flow formula can be used $f = 64/\overline{Re}$.

Disregarding, according to a first approximation, the unsteady friction term $\overline{\tau}_{fdf}$ and performing the appropriate substitutions of eq. 4 into eq. 2, the following ordinary differential equation linear in $\overline{G}$ can be obtained:

$$\frac{d\overline{G}}{dt} = \frac{A}{l}\Delta p - \pi d\frac{\langle \overline{f} \rangle}{8\rho A^2}\langle \overline{G} \rangle \left| \langle \overline{G} \rangle \right| \qquad (6)$$

the integrated form of which over time is:

$$\overline{G}(t) = \overline{G}_0 + \frac{A}{l}\int_0^t \Delta p \, dt - \pi d\frac{\langle \overline{f} \rangle}{8\rho A^2}\langle \overline{G} \rangle \left| \langle \overline{G} \rangle \right| t \qquad (7)$$

The pressure difference $\Delta p$ can be approximated by means of an expansion of analytically integrable functions. In this particular case the pumps used to reach high pressure and the injectors introduce periodic forces and it is therefore possible to use a Fourier expansion of $\Delta p$ and employ the latter in the solution of the integral:

$$\Delta p(t) = a_0 + \sum_{k=1}^{\infty}\left[a_k\cos(\omega_k t) + b_k\sin(\omega_k t)\right] \approx \langle \Delta p \rangle + \sum_{k=1}^{N}\left[a_k\cos(k\frac{2\pi}{T}t) + b_k\sin(k\frac{2\pi}{T}t)\right] (8)$$

where $a_0$ is the average over time of $\Delta p(t)$, i.e. $\langle \Delta p \rangle e$ $a_k$, $b_k$ $\forall k \geq 1$ are the coefficients of the harmonic term $k$ having frequency $\omega_k = 2k\pi/T$. If the pressure measurement period is lower than the fundamental frequency of the system analysed, $T$ will coincide with the measurement period, otherwise it coincides with the duration of the work cycle of the system on which the meter implementing the method according to the present invention is installed. To reach a sufficient approximation level, $N$ is the number of harmonic terms corresponding, for example, to 95% of the overall energy of the Fourier spectrum of $\Delta p$ on $T$.

Furthermore, when eq. 7 refers to a periodic flowrate of period $T$ and is integrated on said period, $\langle \overline{G} \rangle = \langle G \rangle$

and $\langle G \rangle = 1/T\int_0^T G \, dt$, therefore:

$$\frac{A}{l}\langle \Delta p \rangle = \pi d\frac{\langle f \rangle}{8\rho A^2}\langle G \rangle \left| \langle G \rangle \right| \qquad (9)$$

Eq. 8 combined with eq. 9 allows the average flowrate $(G)$ in the period $T$ to be obtained. This is a first result of use of the definition of the steady wall friction according to eq. 4 where $\overline{\tau_{fdf}} = 0$.

According to the present invention, $\Delta p(t)$ is detected by means of two pressure sensors for liquids spaced by a quantity 'l' along the liquid supply pipe. Said sensors have a zero error, as defined in the introductory part of the description. This error significantly disturbs the estimate of the average flowrate in eq. (9), making it ineffective.

According to a further aspect of the present invention, it is possible to eliminate the effect of the zero errors of the pressure sensors on the flowrate value.

On the basis of eq. 8 and 9 it is possible to solve the time integral of eq. 7:

$$\overline{G}(t) = \overline{G}_0 + \frac{A}{l}\sum_{k=1}^{N}\left\{\frac{a_k}{\omega_k}\sin(\omega_k t) + \frac{b_k}{\omega_k}\left[1 - \cos(\omega_k t)\right]\right\} \qquad (10)$$

and, subsequently, obtain the following expression of the average flowrate in the period $T$:

$$\langle G \rangle = \overline{G}_0 + \frac{A}{l}\frac{1}{T}\sum_{k=1}^{N}\left\{-\frac{a_k}{\omega_k^2}\left[\cos(\omega_k T) - 1\right] - \frac{b_k}{\omega_k^2}\sin(\omega_k T) + \frac{b_k}{\omega_k}T\right\} = \overline{G}_0 + \frac{A}{l}\sum_{k=1}^{N}\frac{b_k}{\omega_k} (11)$$

By means of equations 10 and 11 it is possible to define the following quantity $\Delta\overline{G}(t) = \overline{G}(t) - \langle G \rangle$ which is expressed as:

$$\Delta \overline{G}(t) = \frac{A}{l} \sum_{k=1}^{N} \left[ \frac{a_k}{\omega_k} \sin(\omega_k t) - \frac{b_k}{\omega_k} \cos(\omega_k t) \right] \qquad (12)$$

Eq. 12 is not disturbed by the zero errors of the pressure sensors since the term $a_0$ of the expansion of $\Delta p(t)$ in eq. 8, in which said errors reflect its presence, is cancelled with the steady friction by means of eq. (9) since $\langle \Delta p \rangle = a_0$.

Eq. 12 also allows only two pressure sensors to be used to measure a fluctuation of the flowrate around the average value, since it is not necessary to calculate or measure either $\langle G \rangle$ or $\overline{G}_0$. If the absolute value of the unsteady flowrate is required, the relation $\overline{G}(t) = \langle G \rangle + \Delta \overline{G}(t)$ can be used.

According to an advantageous aspect of the present invention, the average flowrate in mass $\langle G \rangle$ can be detected by means of known systems, which operate at low pressure, for example low cost turbine flowrate meters or Coriolis effect flowrate meters, arranged at the low pressure inlet (or inlets) and/or at the low pressure outlet (or outlets) of the system.

According to a further aspect of the present invention, the system of equations 1 can also be solved by considering a wall friction term depending on the frequency (case $\overline{\tau}_{fdf} \neq 0$). For calculation of the friction $\overline{\tau}_{fdf}$ we propose, following a consolidated approach in the scientific literature on the topic, applying to the turbulent flow what has been verified for the laminar flow by Kagawa, T., Lee, I. Y., Kitagawa, A., and Taakenaka, T., 1983, "High speed and accurate computing method of frequency-dependent friction in laminar pipe flow for characteristics methods", Trans. Jpn. Soc. Mech. Eng., Ser. B 49(447), 2638-2644:

$$\overline{\tau}_{fdf} = \frac{4\mu}{d} \sum_{k=1}^{10} \overline{z}_k(t), \quad \text{where} \quad \overline{z}_k(t) = m_k exp\left( -\frac{n_k}{2} \delta t^* \right) \frac{\overline{G}(t) - \overline{G}(t-\delta t)}{\rho A} + exp\left( -n_k \delta t^* \right) \overline{z}_k(t-\delta t) \quad (13)$$

where $t^* = 4\mu t/\rho d^2$ is an adimensional parameter depending on the time and $m_k$, $n_k$ are constant parameters (see for example Ferrari, A., 2010, "Modelling approaches to acoustic cavitation in transmission pipelines", International Journal of Heat and Mass Transfer 53, pp. 4193-4203).

According to a further aspect of the present invention, eq. 9 can be modified considering that, as a result of the wall friction due to the unsteady liquid flow, the flowrate $\langle G \rangle$ is reduced with respect to that of eq. 9:

$$\frac{A}{l} \langle \Delta p \rangle = \pi d \frac{\langle f \rangle}{8 \rho A^2} \langle G \rangle |\langle G \rangle| + \pi d \langle \tau_{fdf} \rangle \qquad (14)$$

The term $\langle \tau_{fdf} \rangle$ can be expressed as an arithmetic average along the interval of time T:

$$\langle \tau_{fdf} \rangle \approx \frac{4\mu}{d} \frac{1}{J} \sum_{j=0}^{J-1} \sum_{k=1}^{10} \overline{z}_k(j\delta t) = \frac{4\mu}{d} \sum_{k=1}^{10} \frac{1}{J} \sum_{j=0}^{J-1} \overline{z}_k(j\delta t) = \frac{4\mu}{d} \sum_{k=1}^{10} \langle z_k \rangle \quad (15)$$

in which $j = T/\delta t$ represents the number of time steps $\delta t$ contained in the pressure measurement period T. The term defined by the expression 15 can be added in the solution of the integral in the time of eq. 6 in which the term $\overline{\tau}_{fdf}$ is included:

$$\overline{G}(t) = \overline{G}_0 + \frac{A}{l} \sum_{j=1}^{N} \left\{ \frac{a_k}{\omega_k} \sin(\omega_k t) + \frac{b_k}{\omega_k} \left[ 1 - \cos(\omega_k t) \right] \right\} - \pi d \overline{\Gamma}_{fdf} \quad (16)$$

in which:

$$\overline{\Gamma}_{fdf} = \int_0^t \Delta \overline{\tau}_{fdf} \, dt = \int_0^t \left[ \overline{\tau}_{fdf} - \langle \tau_{fdf} \rangle \right] dt \approx \frac{4\mu}{d} \sum_{j=0}^{(t/\delta t)-1} \sum_{k=1}^{10} \overline{z}_k(j\delta t)\delta t - \frac{4\mu}{d} t \sum_{k=1}^{10} \langle z_k \rangle \quad (17)$$

in which the ratio $t/\delta t$ is an integer number since the time $t$ elapses in a discrete manner with a step $\delta t$. Eq. (16) generalizes eq. (10) in the event of presence of the unsteady friction.

With reference to eq. 11, the term relative to the unsteady friction is introduced as follows:

$$\langle G \rangle = \overline{G}_0 + \frac{A}{l} \sum_{j=1}^{N} \frac{b_k}{\omega_k} - \frac{\pi d}{T} \int_0^T \overline{\varGamma}_{fdf} \, dt = \overline{G}_0 + \frac{A}{l} \sum_{j=1}^{N} \frac{b_k}{\omega_k} - \pi d \langle \varGamma_{fdf} \rangle \quad (18)$$

where the average in the time $T$ of $\overline{\varGamma}_{fdf}$ is defined as:

$$\langle \varGamma'_{fdf} \rangle = \frac{1}{T} \int_0^T \overline{\varGamma}_{fdf} \, dt = \frac{1}{T} \int_0^T \left[ \int_0^t \Delta \overline{\tau}_{fdf}(\lambda) \, d\lambda \right] dt \approx \frac{4\mu}{d} \frac{1}{J} \sum_{t/\delta t=1}^{J} \sum_{j=0}^{(t/\delta t)-1} \sum_{k=1}^{10} \overline{z}_k (j\delta t) \delta t - \frac{2\mu T}{d} \sum_{k=1}^{10} \langle z_k \rangle \quad (19$$

)

The formula that allows calculation of the fluctuation of the flowrate thus becomes:

$$\Delta \overline{G}(t) = \frac{A}{l} \sum_{j=1}^{N} \left[ \frac{a_k}{\omega_k} \sin(\omega_k t) - \frac{b_k}{\omega_k} \cos(\omega_k t) \right] - \pi d \, \Delta \overline{\varGamma}'_{fdf} \quad (20)$$

in which $\Delta \overline{\varGamma}_{fdf} = \overline{\varGamma}_{fdf} - \langle \varGamma_{fdf} \rangle$ and $\overline{z}_k(t)$ depends on the time according to the relation:

$$\overline{z}_k(t) = m_k exp\left( -\frac{n_k}{2} \delta t^* \right) \frac{\Delta \overline{G}(t) - \Delta \overline{G}(t - \delta t)}{\rho A} + exp\left( -n_k \delta t^* \right) \overline{z}_k(t - \delta t) \quad (21)$$

Also eq. 20, like the simpler eq. 12, allows the terms deriving from the Fourier analysis of the pressure signals detected by the pressure sensors to be used, but the term $\overline{z}_k(t)$ introduces a dependence on the time which necessarily requires an iterative solution. Advantageously it is possible to perform in a first phase the preliminary calculation of the absolute value of the unsteady flowrate or of the fluctuation of the flowrate by means of eq. 12 and, subsequently, use eq. 20, 17, 19 and 21 to calculate the final value of the flowrate starting from the preliminary flowrate distribution.

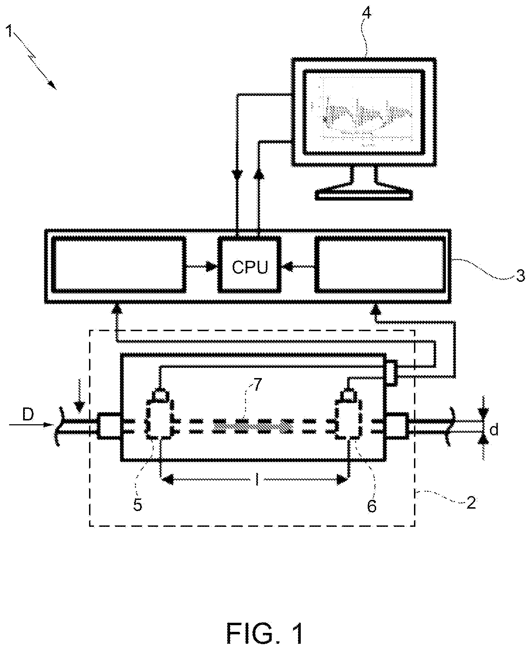

In figure 1 the number 1 illustrates overall a schematic configuration of a measurement assembly or meter which operates according to the method described in the preceding paragraphs and the relative variations.

The assembly 1 comprises a detection station 2, a control unit 3 for processing the signals S coming from the detection station 2 by means of conditioners and CPU and a display device 4, for example an LCD screen, to display the data processed by the control unit 3.

The detection station 2 comprises in particular a first sensor 5 upstream and a second sensor 6 downstream arranged in sequence with respect to the direction D of a flow of liquid into a pipe 7. The detection station 2 can comprise or not comprise the pipe 7. The sensors 5, 6 are spaced by a quantity 'l' so as to detect the pressure difference inside the pipe 7. The sensors 5, 6 can be configured to be applied on an existing pipe 7, or the pipe 7 and the sensors 5, 6 can define a preassembled unit comprising appropriate connections, for example releasable connections like threaded connections, bayonet connections or similar, to allow assembly in an existing liquid supply circuit where the flowrate has to be measured.

The control unit 3 is programmed to receive in input signals S5, S6 coming from the respective pressure sensors 5, 6, to condition said signals and process said signals by means of a CPU to obtain the Fourier coefficients present in eq. 12 and/or 20. The control unit 3 can also be programmed to store the values of the geometric characteristics of the system and/or the physical characteristics of the liquid and/or of any other parameters necessary for the calculations required by eq. 12 and/or 20 and any volumetric flowrate associated with the mass flowrate $\overline{G}(t)$. Preferably, the control unit 3 can have a first calculation mode for calculating the flowrate based on the sole eq. 12 and a second calculation mode based on a first phase in which an initial fluctuation of the flowrate value is calculated according to eq. 12 and, by means of known iterative processes which use the initial value calculated by means of eq. 12, bring eq. 20 to converge towards a second value of the fluctuation of the flowrate.

The control unit 3 can further be programmed to calculate the absolute value of the unsteady flowrate according to the formula $\overline{G}(t) = \langle G \rangle + \Delta \overline{G}(t)$ already cited previously and receiving a signal from a third flowrate meter operating at low pressure or several signals coming from a set of flowrate meters operating at low pressure, not illustrated in figure 1. Said flowrate meters are known, like a Coriolis effect flowrate meter or a low cost turbine meter. Advantageously said meters can have dynamic characteristics inferior to those of the pressure sensors 5, 6.

If the two pressure sensors 5 and 6 are piezoelectric, in order to improve measurement accuracy, a third piezoresistive pressure sensor can be provided in the detection station 2 as a reference for the piezoelectric transducers and to allow estimation of the absolute pressure. Said sensor has dynamic characteristics inferior to those of the piezoelectric pressure sensors 5, 6.

If the sensors 5 and 6 are piezoresistive, then it is not necessary to provide the third pressure sensor in the detection station 2.

It may also be expedient to provide in the detection station 2 a thermocouple for measurement of the average temperature, which influences the characteristics of the fluid (viscosity, etc.). Said thermocouple can be integrated in the third piezoresistive sensor when the two sensors 5 and 6 are piezoelectric.

In high frequency dynamic conditions it is preferable for the pressure sensors 5, 6 to be piezoelectric. To further improve the measurement accuracy of the piezoelectric sensors, stepwise calibrations of the piezoelectric sensors can be carried out, each performed around a pressure level (for example a calibration can be carried out every 20 bar or every 50 bar throughout the operating range from 50 bar to 2500 bar). The calibration curves are stored in the control unit and, on the basis of the pressure value read by the third piezoresistive pressure sensor, the control unit selects and uses the most correct calibration curve of each piezoelectric sensor.

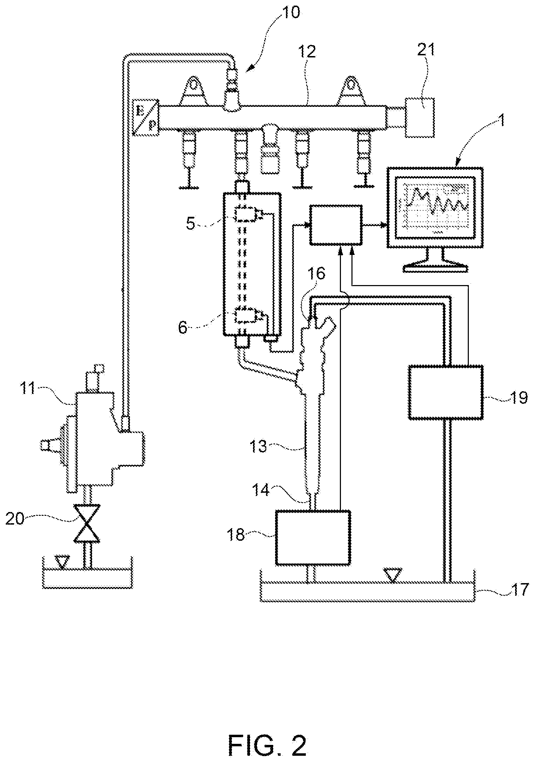

Figure 2 illustrates an application of the measurement assembly 1 in a fuel injection circuit 10. The injection circuit 10 comprises a high pressure pump 11, an accumulator or 'rail' 12 which receives a high pressure flowrate from the pump 11 and at least one injector 13 connected to the accumulator 12. The pressure sensors 5, 6 are mounted between the accumulator 12 and the injector 13. The latter has a first outlet 14 leading to a combustion chamber (not illustrated) and a second outlet 16 (recirculation) leading to a tank 17 without passing through the combustion chamber. In order to calculate the absolute value of the unsteady flowrate, the measurement assembly 1 further comprises a first and a second low pressure flowrate meter 18, 19 respectively arranged downstream of the first and second outlet 14, 16. The supply circuit 10 further comprises a flowrate regulation valve 20 arranged upstream of the pump 11 and a pressure control valve 21 to monitor the pressure inside the accumulator 12.

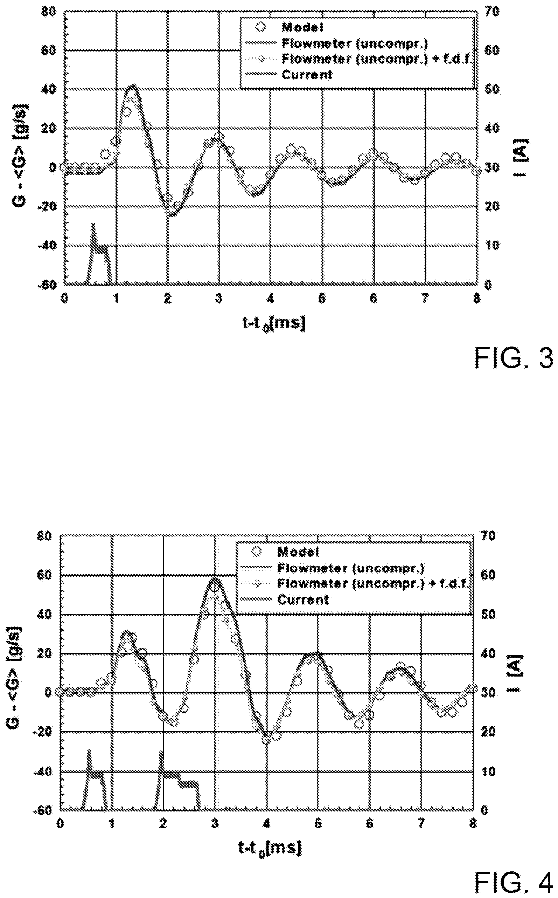

Figures 3 and 4 compare the time trends of the flowrates along the pipe that connects the rail 12 to the injector 13, obtained with an accurate one-dimensional mathematical model of the injection system (these trends are shown by circular symbols in the figures in question), previously validated in terms of flowrate injected and pressure transients in different points of the high pressure circuit, with the flowrate estimates obtained by means of eq. 12 (continuous lines) and eq. 20 (continuous lines with rhomboidal symbols). As can be seen, there is agreement between the flowrate estimates obtained with the measurement method according to the present invention and the results of the numerical simulations. Furthermore the differences between the estimates obtained with eq. 12 and 20 are evident only when the amplitude of the fluctuation of the flowrate is considerable and the effect of the addition of the term $\overline{\tau_{fdf}}$ in eq. 20 results in an attenuation of the intensity of said oscillations.

The advantages offered by the measurement method according to the present invention are the following.

Eq. 6 is ordinary and linear and comes from simplification of the system of equations 1 modelling the wall friction according to eq. 4 where the term $\overline{\tau_{fdf}}$ has been disregarded and considering the fluid as locally incompressable. The term $\overline{\tau_{sf}}$ as defined in eq. 4 introduces an accurate approximation and considerably simplifies the solution of the system of equations 1 allowing eq. 6 to be obtained, which can be easily solved both numerically and analytically to calculate the absolute value of the unsteady flowrate.

Eq. 12, obtained according to a particular solution of eq. 6, is independent of the zero errors. The same applies also to eq. 20.

An example of a method particularly useful for implementing in electronic components comprises use of the Fourier expansions which allow a robust analytical solution to be obtained.

If it is sufficient to measure only a fluctuation in flowrate and not an absolute flowrate, it is possible to use only two pressure sensors and therefore, create a relatively inexpensive and compact measurement device.

To obtain the absolute value of the unsteady flowrate it is possible to add to the fluctuation of the flowrate a term representative of the average flowrate. The relative measurement can be performed at low pressure (1-60 bar) and often with a less costly sensor.

Lastly it is clear that modifications or variations can be made to the measurement method according to the present invention without departing from the protective scope as defined by the attached claims.

The flowrate measurement method according to the preceding paragraphs can also be adopted in further circuits in which a liquid flows at high pressure like hydraulic circuits, in particular oil hydraulic circuits or power hydraulic circuits.

**Claims**

1. A method for calculating an absolute value of an unsteady flowrate ($\overline{G}$(t)) of a homogeneous liquid comprising the steps of:

- measuring the pressure difference ($\Delta$p(t)) along a supply pipe (7) of the liquid;
- calculating a fluctuation of the flowrate ($\Delta\overline{G}(t)$) of the liquid on the basis of a solution of an approximation of a system of partial differential equations comprising the equation of conservation of mass and the momentum balance equation, in which the wall friction ($\tau_w$) is modelled so as to comprise at least one first term ($\overline{\tau_{sf}}$) which is proportional to the square of the average flowrate over time ($\langle\overline{G}\rangle$) by means of a proportionality constant which is a function at least of the Reynolds number referring to the liquid and to the pipe (7), of the density of the fluid and of the cross-section of the pipe (7); **characterized by** further comprising the steps of:
- calculating said fluctuation of the flowrate ($\Delta\overline{G}(t)$) around the average flowrate over time ($\langle\overline{G}\rangle$) by using pressure signals detected by two pressure sensors (5, 6),
- calculating the absolute value of the unsteady flowrate ($\overline{G}(t)$) on the basis of the sum of said fluctuation of the flowrate ($\Delta\overline{G}(t)$ ) and the average flowrate over time ($\langle\overline{G}\rangle$).

2. A method according to claim 1, **characterised in that** said solution is a function of the parameters of the Fourier analysis of the pressure signals detected by the pressure sensors (5, 6).

3. A method according to claim 2, **characterised in that** the fluctuation of the flowrate ($\Delta\overline{G}(t)$) is calculated on the basis of the following expression:

$$\frac{A}{l}\sum_{k=1}^{N}\left[\frac{a_k}{\omega_k}\sin(\omega_k t)-\frac{b_k}{\omega_k}\cos(\omega_k t)\right]$$

where:

'A' is the cross section of the pipe (7);
'l' is the length of the pipe (7) to which the pressure variation ($\Delta$p(t)) refers; and
the terms of the expansion are the terms obtained by means of the Fourier analysis of the pressure signals detected by the pressure sensors (5, 6).

4. A method according to any one of the preceding claims, **characterised in that** the wall friction ($\tau_w$) is modelled so as to comprise a second term ($\overline{\tau_{fdf}}$), called unsteady friction, as a function of the time trend of the absolute value of the unsteady flowrate ($\overline{G}(t)$).

5. A method according to claim 4, **characterised by** comprising the step in which a first value of the fluctuation of the flowrate ( $\Delta\overline{G}(t)$) or of the absolute vale of the unsteady flowrate ($\overline{G}(t)$) is calculated, disregarding said second term ($\overline{\tau_{fdf}}$); subsequently a second value of the fluctuation of the flowrate ($\Delta\overline{G}(t)$) is calculated via iterative process by applying the model comprising the second term ($\overline{\tau_{fdf}}$) and using said first value in said iterative process.

6. A method according to any one of the preceding claims, **characterised in that** it detects an average pressure value and selects, on the basis of said average value, a calibration curve for each sensor (5, 6) which detects said pressure difference ($\Delta$p(t)), it being possible to select at least two calibration curves relative to two different pressure intervals respectively.

7. A method according to any one of the preceding claims, **characterised in that** the approximation obtains an ordinary differential equation from said system of partial differential equations and said solution comprises a term which analytically resolves a linear form of said ordinary differential equation, the ordinary differential equation comprising said at least first term ($\overline{\tau_{sf}}$).


**Patentansprüche**

1. Verfahren zur Berechnung eines Absolutwerts einer unregelmäßigen Flussrate ($\overline{G}(t)$) einer homogenen Flüssigkeit, umfassend die Schritte:

- Messen der Druckänderung ($\Delta$p(t)) entlang einer Versorgungsleitung (7) der Flüssigkeit,

- Berechnung einer Fluktuation der Flussrate ($\Delta\overline{G}$(t)) der Flüssigkeit auf der Grundlage einer Lösung einer Approximation eines Systems partieller Differentialgleichungen, umfassend die Massenerhaltungsgleichung und die Impulserhaltungsgleichung, wobei die Wandreibung ($\tau_w$) modelliert wird, um wenigstens einen ersten Term ($\overline{\tau_{sf}}$) zu umfassen, der proportional zum Quadrat der durchschnittlichen Flussrate über die Zeit ($\langle\overline{G}\rangle$) ist, mittels einer Proportionalitätskonstante, die eine Funktion wenigstens der Reynolds-Zahl ist, die sich auf die Flüssigkeit und die Leitung (7) bezieht, der Dichte des Fluids und des Querschnitts der Leitung (7),

**dadurch gekennzeichnet, dass** es weiter die Schritte umfasst:

- Berechnung der Fluktuation der Flussrate ($\Delta\overline{G}$(t)) um die durchschnittliche Flussrate über die Zeit ($\langle\overline{G}\rangle$) unter Verwendung von mit zwei Drucksensoren (5, 6) gemessenen Drucksignalen,
- Berechnen des Absolutwerts der unregelmäßigen Flussrate ($\overline{G}$(t)) auf Grundlage der Summe der Fluktuation der Flussrate ($\Delta\overline{G}$(t)) und der durchschnittlichen Flussrate über die Zeit ($\langle\overline{G}\rangle$).

2. Verfahren nach Anspruch 1, **dadurch gekennzeichnet, dass** die Lösung eine Funktion der Parameter der Fourier-Analyse der von den Drucksensoren (5, 6) gemessenen Drucksignale ist.

3. Verfahren nach Anspruch 2, **dadurch gekennzeichnet, dass** die Fluktuation der Flussrate ($\Delta\overline{G}$(t)) auf Grundlage des folgenden Ausdrucks berechnet wird:

$$\frac{A}{l}\sum_{k=1}^{N}\left[\frac{a_k}{\omega_k}\sin(\omega_k t)-\frac{b_k}{\omega_k}\cos(\omega_k t)\right]$$

worin

"A" der Querschnitt der Leitung (7) ist,
"$l$" die Länge der Leitung (7) ist, auf die sich die Druckänderung ($\Delta p$(t)) bezieht, und
die Expansionsterme diejenigen Terme sind, die mittels der Fourier-Analyse der von den Drucksensoren (5, 6) gemessenen Drucksignale erhalten werden.

4. Verfahren nach einem der vorhergehenden Ansprüche, **dadurch gekennzeichnet, dass** die Wandreibung ($\tau_w$) so modelliert wird, dass sie einen zweiten Term ($\overline{\tau_{fdf}}$) umfasst, als unregelmäßige Reibung bezeichnet, als Funktion des Zeittrends des Absolutwerts der unregelmäßigen Flussrate ($\overline{G}$(t)).

5. Verfahren nach Anspruch 4, **dadurch gekennzeichnet, dass** es den Schritt umfasst, in dem ein erster Wert der Fluktuation der Flussrate ($\Delta\overline{G}$(t)) oder der Absolutwert der unregelmäßigen Flussrate ($\overline{G}$(t)) unter Nichtbeachtung des zweiten Terms ($\overline{\tau_{fdf}}$) berechnet wird, anschließend ein zweiter Wert der Fluktuation der Flussrate ($\Delta\overline{G}$(t)) über einen iterativen Prozess berechnet wird, indem das den zweiten Term ($\overline{\tau_{fdf}}$) enthaltende Modell angewendet und der erste Wert in dem iterativen Prozess verwendet wird.

6. Verfahren nach einem der vorhergehenden Ansprüche, **dadurch gekennzeichnet, dass** es einen Durchschnittsdruckwert ermittelt und auf der Grundlage des Durchschnittswerts eine Kalibrierungskurve für jeden Sensor (5, 6) auswählt, der die Druckdifferenz ($\Delta p$(t)) ermittelt, wobei es möglich ist, wenigstens zwei Kalibrierungskurven in Bezug auf zwei unterschiedliche Druckintervalle auszuwählen.

7. Verfahren nach einem der vorhergehenden Ansprüche, **dadurch gekennzeichnet, dass** die Approximation eine gewöhnliche Differentialgleichung aus dem System partieller Differentialgleichungen ergibt und die Lösung einen Term umfasst, der die gewöhnliche Differentialgleichung analytisch in eine lineare Form auflöst, wobei die gewöhnliche Differentialgleichung den wenigstens ersten Term ($\overline{\tau_{sf}}$) umfasst.

**Revendications**

1. Procédé pour calculer une valeur absolue d'un débit instable ($\overline{G}$(t)) d'un liquide homogène comprenant les étapes de :

- mesure de la différence de pression ($\Delta$p(t)) le long d'un tuyau d'alimentation (7) du liquide ;
- calcul d'une fluctuation du débit ($\Delta\overline{G}$(t)) du liquide sur la base d'une solution d'une approximation d'un système d'équations différentielles partielles comprenant l'équation de conservation de masse et l'équation d'équilibre des quantités de mouvement, dans lequel la friction de paroi ($\tau_w$) est modélisée de manière à comprendre au moins un premier terme ($\overline{\tau}_{sf}$) qui est proportionnel au carré du débit moyen dans le temps ($\langle\overline{G}\rangle$) à l'aide d'une constante de proportionnalité qui est fonction au moins du nombre de Reynolds se référant au liquide et au tuyau (7), de la densité du fluide et de la section transversale du tuyau (7) ;

**caractérisé en ce qu'**il comprend en outre les étapes suivantes :

- calculer ladite fluctuation du débit ($\Delta\overline{G}$(t)) autour du débit moyen dans le temps ($\langle\overline{G}\rangle$) en utilisant des signaux de pression détectés par deux capteurs de pression (5, 6),
- calculer la valeur absolue du débit instable ($\overline{G}$(t)) sur la base de la somme de ladite fluctuation du débit ($\Delta\overline{G}$(t)) et du débit moyen dans le temps ($\langle\overline{G}\rangle$).

2. Procédé selon la revendication 1, **caractérisé en ce que** ladite solution est fonction des paramètres de l'analyse de Fourier des signaux de pression détectés par les capteurs de pression (5, 6).

3. Procédé selon la revendication 2, **caractérisé en ce que** la fluctuation du débit ($\Delta\overline{G}$(t)) est calculée sur la base de l'expression suivante : où :

$$\frac{A}{l}\sum_{k=1}^{N}\left[\frac{a_k}{\omega_k}\sin(\omega_k t) - \frac{b_k}{\omega_k}\cos(\omega_k t)\right]$$

'A' est la section transversale du tuyau (7) ;
'l' est la longueur du tuyau (67) à laquelle la variation de pression ($\Delta$p(t)) se réfère ; et les termes de l'expansion sont les termes obtenus à l'aide de l'analyse de Fourier des signaux de pression détectés par les capteurs de pression (5, 6).

4. Procédé selon l'une quelconque des revendications précédentes, **caractérisé en ce que** la friction de paroi ($\tau_w$) est modélisée de manière à comprendre un deuxième terme ($\overline{\tau}_{fdf}$), appelé friction instable, comme une fonction de la tendance temporelle de la valeur absolue du débit instable ($\overline{G}$(t)).

5. Procédé selon la revendication 4, **caractérisé en ce qu'**il comprend l'étape dans laquelle une première valeur de la fluctuation du débit ($\Delta\overline{G}$(t)) ou de la valeur absolue du débit instable ($\overline{G}$(t)) est calculée, sans tenir compte du deuxième terme ($\overline{\tau}_{fdf}$) ; ensuite une deuxième valeur de la fluctuation du débit ($\Delta\overline{G}$(t)) est calculée par processus itératif en appliquant le modèle comprenant le deuxième terme ($\overline{\tau}_{fdf}$) et en utilisant ladite première valeur dans ledit processus itératif.

6. Procédé selon l'une quelconque des revendications précédentes, **caractérisé en ce qu'**il détecte une valeur de pression moyenne et sélectionne, sur la base de ladite valeur moyenne, une courbe d'étalonnage pour chaque capteur (5, 6) qui détecte ladite différence de pression ($\Delta$p(t)), étant possible de sélectionner au moins deux courbes d'étalonnage par rapport à deux intervalles de pression différents respectivement.

7. Procédé selon l'une quelconque des revendications précédentes, **caractérisé en ce que** l'approximation obtient dudit système d'équations différentielles partielles une équation différentielle ordinaire et ladite solution comprend un terme qui résout analytiquement une forme linéaire de ladite équation différentielle ordinaire, l'équation différentielle ordinaire comprend ledit au moins premier terme ($\overline{\tau}_{sf}$).

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009019591 A1

**Non-patent literature cited in the description**

- **KAGAWA, T. ; LEE, I. Y. ; KITAGAWA, A. ; TAAK-ENAKA, T.** High speed and accurate computing method of frequency-dependent friction in laminar pipe flow for characteristics methods. *Trans. Jpn. Soc. Mech. Eng., Ser. B,* 1983, vol. 49 (447), 2638-2644

- **FERRARI, A.** Modelling approaches to acoustic cavitation in transmission pipelines. *International Journal of Heat and Mass Transfer,* 2010, vol. 53, 4193-4203